# EUROPEAN PATENT APPLICATION

(11) **EP 4 036 481 A1**
(43) Date of publication of application: **03.08.2022**
(21) Application number: 21154806.0
(22) Date of filing: 02.02.2021
(51) Int. Cl.: F24C 15/16, A47J 27/04, F24C 15/32

(54) **STEAM COOKING APPARATUS**

(71) Applicant: Koninklijke Philips N.V., 5656 AG Eindhoven (NL)
(72) Inventor: MIKULA, Christian, 5656 AE Eindhoven (NL); VAUPOT, Jan, 5656 AE Eindhoven (NL); SCHRATTER, Bernhard, 5656 AE Eindhoven (NL); SCHRETTLINGER, Joachim, 5656 AE Eindhoven (NL)
(74) Representative: de Vries, Janna

(57) **Abstract**

A steam cooking apparatus (10) has a cooking chamber (12) and a heating chamber (45) adjacent the cooking chamber (12) used for heating air laden with steam. A steam heater is provided in the cooking chamber. Air and steam is circulated between the cooking chamber and the heating chamber (45), through a vent arrangement (50, 52, 54, 56). A food support (75) is provided for mounting in the cooking chamber. The food support has a bottom surface which comprises a channel arrangement for positioning over the steam heater. The channel arrangement results in desired flow conditions over the steam heater to enable efficient generation of steam.

## Description

### FIELD OF THE INVENTION

This invention relates to a steam cooker, also referred to as a steamer.

### BACKGROUND OF THE INVENTION

Steam cooking (also referred to as steaming) is commonly known as one of the healthiest cooking methods. In particular, steam cooking is often preferred over other cooking methods such as boiling, frying and baking because it results in a lower amount of nutrient destruction.

This is because steam cooking generally operates at a lower temperature, typically below 100 degrees Celsius, but nevertheless enables short cooking times due to the wet steam environment. The presence of water as the cooking medium causes a leaching out of water soluble nutrients when boiling, and this is greatly reduced by steam cooking.

A traditional steamer comprises a pan for placing over the hob of a cooker, in which water is boiled. Food to be steamed is mounted over the pan in trays having perforated bases.

Steam cookers are now well known and comprise a steam cooking chamber around which hot air and steam are circulated by a fan. The steam cooker is for example a top-loaded device, rather than a more conventional steam oven with a front door.

Steam is introduced into the cooking chamber, either from an external steam source or else generated internally within the cooking chamber for example by using a vaporizer at the bottom of the cooking chamber. A heating chamber adjacent to the cooking chamber comprises a fan and a heater to generate a circulatory flow of hot air and steam. The steam generation may take place in the heating chamber instead of in the cooking chamber.

The heating chamber is a closed unit next to the main cooking chamber, but it has at least one opening for air intake from the cooking chamber and at least one opening for air delivery into the cooking chamber.

It is desirable to make the generation of steam as efficient as possible, so that the steam can heat up quickly, and rapidly generate the desired humid environment. The efficient generation of steam will also allow optimum use of the supplied electric power, such that the cooking chamber can be as small as possible for cooking a given food mass.

### SUMMARY OF THE INVENTION

The invention is defined by the claims.

According to examples in accordance with an aspect of the invention, there is provided a steam cooking apparatus, comprising:
a cooking chamber;
a steam heater at a bottom surface of the cooking chamber;
a water reservoir;
a delivery system for delivering water from the water reservoir to the steam heater;
a heating chamber adjacent the cooking chamber;
a heating arrangement located within the heating chamber for heating air laden with steam;
a vent arrangement between the cooking chamber and the heating chamber to allow a circulatory flow of steam laden air between the heating chamber and the cooking chamber; and
a food support for mounting in the cooking chamber, wherein the food support has a bottom surface which comprises a channel arrangement for positioning over the steam heater.

In this design, the bottom surface of a food support has a channel arrangement to influence the flow of steam and air over the steam heater. In this way, th steam generation can be improved by controlling the flow of air and steam over the steam heater and therefore over the water surface, in order to accelerate the evaporation of water. An air flow is thereby ensured over the steam heater in operation (i.e. with an air flow speed > 0).

The circulatory flow for example has a flow rate in the range 2 liters/second to 30 liters/second, for example in the range 5 liters/second to 15 liters/second between the cooking chamber and the heating chamber. This is achievable with a fan for driving the circulatory flow.

The steam heater may have an evaporation rate in the range 5g/min to 10g/min.

The flow over the steam heater for example has a speed in the range 0.1 m/s to 5 m/s, for example in the range 0.5m/s to 1.5m/s.

The flow over the steam heater for example has a flow rate in the range 1 liter/second to 30 liters/second.

These flow and steam generation parameters provide optimal functionality of the apparatus so that steam can be generated efficiently.

The channel arrangement may define a channel height in the range 5mm to 30mm. This channel height is the height over the bottom of the cooking chamber. The height and width of the channels of the channel arrangement are selected to define a suitable cross sectional areas to result in desired flow conditions over the steam heater.

A width of a space around the periphery of the food support, in a horizontal plane, is for example in the range 5mm to 30mm. The air flow passes around the food support to reach the area beneath, and hence the space may also be considered as an extension to the channel arrangement, and the space is designed to achieve the desired flow conditions.

The bottom surface for example forms the channel arrangement by raised portions of the bottom surface (i.e. depressions when viewed from beneath). Thus, the channel arrangement is simply formed as a shape feature of the bottom surface - the bottom surface is for example stamped or pressed into a desired shape.

The channel arrangement may comprise first and second orthogonal channels which cross. One may form part of the circulatory flow, and the other may be for delivering steam from the steam heater.

The food support for example comprises feet for standing on the bottom of the cooking chamber, for positioning the bottom surface above the bottom of the cooking chamber. The feet thus set the bottom surface at the correct height so that the channel arrangement defined the desired passageway dimensions in combination with the bottom of the cooking chamber.

The food support may comprise:
a base which functions as a capture tray and which forms the bottom surface; and
a support tray mounted over the base for supporting food items to be cooked.

In this way, it is prevented that food items which drip (e.g. fat) will cook while standing in liquid. This can result in a soggy consistency. The base for example comprises a well beneath the support tray for collecting liquid. The base also forms the channel arrangement as described above.

The well for example has a volume, beneath the support tray, in the range 350ml to 700ml.

The cooking chamber for example comprises a base, a rear wall area and a front wall area, wherein the vent arrangement comprises an extraction vent in the rear wall area through which air is drawn from inside the cooking chamber, and a delivery vent in the rear wall area for delivering air to the cooking chamber.

Thus, there is a circulatory flow around the heating chamber and the cooking chamber through the two vents.

The extraction vent is for example located in a middle region of the rear wall area and this may lead directly to a fan, and the delivery vent is located at a top region of the rear wall area above the extraction vent.

By providing the delivery vent at the top of the rear wall area, above the extraction vent, a circulatory flow is generated which passes along a top of the cooking chamber (i.e. under a lid of the apparatus). In this way, the lid is heated with a continuous flow, thereby reducing condensation on the lid to prevent steaming up of the viewing window formed by the transparent lid. This flow is between the top of the food support and the underside of the lid, and this space provides additional control of the low conditions near the lid.

The cooking apparatus preferably comprises a transparent lid which is inclined downwardly from the rear wall area towards the front wall area.

The term "transparent lid" should be understood as meaning the whole lid if it is entirely transparent, or just the transparent portion if the lid has a transparent window and a significant non-transparent frame. The transparent lid enables inspection of the food during cooking.

By inclining the lid downwardly from the rear wall area towards the front wall area, the design prevents condensation of steam at the transparent section of the lid via heating. The transparent lid is preferably openable and is thus used both for inserting and removing food and for inspection during cooking.

The apparatus preferably comprises a controller adapted to control the steam heater to heat water from the water reservoir to create steam. A water dosing system is preferably also provided for delivering water to the heating arrangement.

A continuous or pulsed delivery of water and a cyclic control of the heating arrangement may for example be used to maintain a cooking temperature in a desired range. A feed arrangement is for example provided to feed water from the water reservoir into contact with a heated surface of the steam heater. This surface is then used to induce evaporation.

The invention also provides a food support for use as the food support of the steam cooking apparatus defined above, for mounting in the cooking chamber of the steam cooking apparatus, wherein the food support has a bottom surface which comprises channel arrangement for positioning over the steam heater.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a known cooking apparatus;
Figure 2 shows the cooking chamber opened up to show the rear wall area and the first and second side wall areas to show one example of vent arrangement;
Figure 3 shows the flow paths in the cooking chamber;
Figure 4 shows the bottom of the cooking chamber;
Figure 5 shows a standard food support;
Figure 6 shows the flow paths with the food support in place;
Figure 7 shows a perspective view of a second example of food support;
Figure 8 shows a simplified diagram of the cooking apparatus including the food support of the type shown in Figure 7, and showing the flow paths;
Figure 9 shows example dimensions for a channel formed by the food support;
Figure 10 shows one channel formed in the bottom surface of the food support in cross section;
Figure 11 shows a further example of food support to which the invention may be applied;
Figure 12 shows the food support of Figure 11 with the support tray removed;
Figure 13 show the food support of Figure 12 from beneath;
Figure 14 shows the food support of Figures 11 to 13 with a preferred channel arrangement layout applied and with the support tray removed;
Figure 15 shows the food support of Figure 14 from beneath; and
Figure 16 shows two possible channel shapes over the steam heater.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a steam cooking apparatus having a cooking chamber and a heating chamber adjacent the cooking chamber used for heating air laden with steam. A steam heater is provided in the cooking chamber. Air and steam is circulated between the cooking chamber and the heating chamber, through a vent arrangement. A food support is provided for mounting in the cooking chamber. The food support has a bottom surface which comprises a channel arrangement for positioning over the steam heater. The channel arrangement results in desired flow conditions over the steam heater to enable efficient generation of steam.

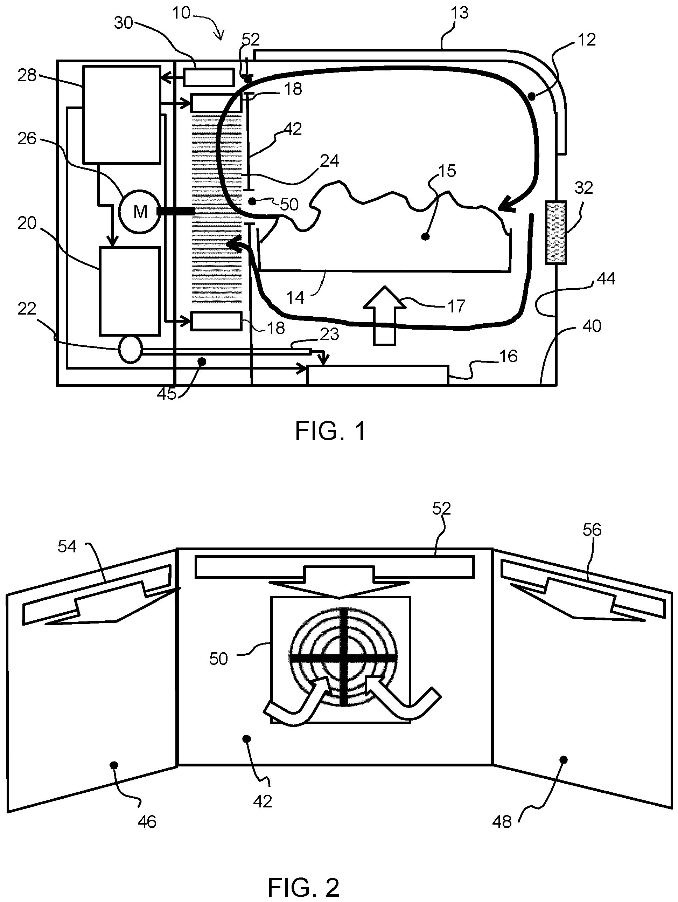

Figure 1 shows a known cooking apparatus 10, in particular as disclosed in WO 2020/148187.

The cooking apparatus comprises a cooking chamber 12 (i.e. a food chamber in which food to be cooked is placed) in which a food basket 14 is mounted. The cooking chamber has a viewing window 13 which may also be the openable lid of the apparatus. Food 15 to be cooked is placed on the food basket which then places the food near the center of the cooking chamber. The food basket has air permeable side walls and optionally an air permeable base so that air and steam can circulate through the basket to the food.

There is a heating arrangement which in this example comprises a first heater 16 for generating steam (a "steam heater") and a second heater 18 for heating air laden with steam. The first heater is used to generate steam (shown as arrow 17) from water which is delivered from a water reservoir 20 by a dosing system 22. The dosing system provides water to a feed arrangement 23 which delivers water to a surface of the first heater 16 to generate steam.

The dosing system may deliver a constant flow of water during cooking or a regularly pulsed delivery of water (so needing no feedback control), but it could also be controlled dynamically during cooking using feedback from a humidity sensor.

A circulation system is provided in the form of a fan 24 and motor 26. The circulation system circulates the steam generated by the first heater 16 around the cooking chamber. The second heater 18 is along the circulation path and thereby further heats the steam to create a high temperature dry steam environment. The circulation system thus moves the saturated air inside the chamber to the food to increase convection and also assists in producing a homogeneous temperature field of all parts inside the cooking chamber, including the viewing window. This is to avoid condensation.

The apparatus is controlled by a controller 28, which controls the heating arrangement 16, 18 and optionally also the dosing system 22. The controller receives temperature information from a temperature sensor 30. The temperature of interest is the temperature at the center of the cooking chamber, where the food is located. However, the temperature sensor, which may be a negative temperature coefficient (NTC) temperature sensor, may be located anywhere in the cooking chamber, with a known correlation between the temperature at the sensor location and the temperature in the middle of the chamber.

The temperature is for example regulated by switching on and off the second heater 18 of the heating arrangement by the controller. The temperature of the first heater, for steam generation, is regulated by a thermostat again by cycling on and off. These two control mechanisms may be independent.

The cooking chamber is vented to the ambient surroundings by vents 32. Thus, the cooking chamber remains at substantially atmospheric pressure during use.

The controller 28 controls the heating arrangement to heat water from the water reservoir to create steam using the first heater 16, and to further heat the steam to create heated steam at a temperature around 100 degrees.

The second heater may further heat the steam for example to 120 degrees Celsius, or in the range 110 to 120 degrees Celsius. This approach is explained in WO 2020/0099339. Higher temperatures up to 200 degrees Celsius could be considered as well.

The circulation system circulates the heated steam around the cooking chamber. The vent or vents of the cooking chamber maintain the pressure at ambient pressure, and thus steam can escape when the maximum possible absolute humidity is reached (for the particular operating temperature), which would otherwise result in an increase in pressure.

The release mechanism provided by the vent or vents means that the steam delivery rate does not need to be controlled, and instead there can be a preset water delivery rate to the first heater 16. The controller may for example implement a control sequence which determines particular points of time when steam generation starts and/or ends. By way of example, a time-delayed start may be used for steam generation. The device is for example in a waiting mode for certain time e.g. 2 minutes from the start or else waiting until the cooking chamber temperature reaches 100 degrees Celsius. Water is then added to the first water heater 16. This pre-heating improves the avoidance of condensation at the window of the transparent lid as discussed below. The device could also have an operation mode without any steam generation.

The cooking chamber 12 comprises a base 40, a rear wall area 42, first and second opposing side wall areas and a front wall area 44. These together define a closed chamber. The rear wall area 42 defines a separation wall which separates the cooking chamber 12 from a heating chamber 45 in which (at least) the fan blades 24 and second heater 18 are housed. In the example shown, the motor 26, water reservoir 20, dosing system 22, and controller 28 are in a further chamber which is isolated from the heating chamber (i.e. there is no gas or liquid passage between them). However, there may be different components in the different chambers.

Figure 2 shows the cooking chamber opened up to show the rear wall area and the first and second side wall areas 46, 48 to show one example of vent arrangement.

The circulation system draws air out of the cooking chamber through an extraction vent 50 in the rear wall area. This vent leads to the fan blades.

A delivery vent arrangement for delivering air (and steam) comprises a first delivery vent 52 at a top region of the rear wall area above the extraction vent 50. It may extend across at least half of the width of the rear wall area, such as across more than 60%, 70% or 80% of that width.

In this example, a second delivery vent 54 is at a top region of the first side wall area 46 and a third delivery vent 56 is at a top region of the second side wall area 48.

In this known design, these vents are the only entry points for air/steam driven by the circulation system. Thus, it is possible through design of the vents and fan to control the circulation of air and steam within the cooking chamber in a reliable and repeatable way.

Note that the term wall "area" is used because the shape (from above) may not be a polygon, but instead may be a more curved shaped thus not having precisely defined sides, front and back. However, the shape (from above) is generally square or rectangular, so that corresponding front, back and sides may be readily identified. However, this does not imply that other shapes are not possible. Even a circle may be considered to have sides, a front and back by dividing it into quadrants.

The arrangement of vents shown enable a flow of the delivered air to pass over the full area of the underside of the lid 13. The viewing window area of the lid 13 has increased heat losses compared to an insulated wall so it is desirable for the window to be exposed to the flow created by the circulation system to maintain the viewing window above the dew point.

To the extent described above, the steam cooking apparatus is as described in WO 2020/148187.

The invention relates to the steam generation process performed by the first, steam, heater 16.

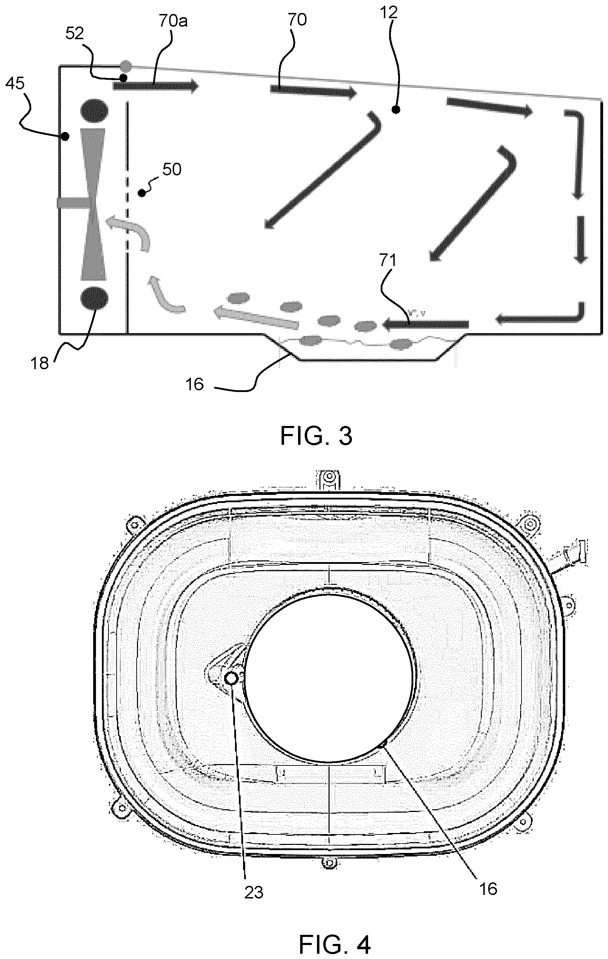

Figure 3 shows the flow paths in the cooking chamber 12 and also shows the heating chamber 45, the first heater 16 (the steam heater), and the second heater 18 (for heating the air laden with steam).

The main circulatory flow is shown as 70 from the delivery vent 52 to the extraction vent 50. Part 71 of this circulatory flow is over the steam heater 16, hence over the surface of the water to be evaporated.

The steam generation efficiency depends on the steamer heater power and water delivery rate to the steam heater. An optimal operating point will for example achieve an evaporation rate in the range of 5 g/min to 10 g/min. The electrical power of the steam heater is for example around 400 W and will then be in balance with a water dripping rate to the steam heater of 10 g/min. The aim is to prevent water remaining in the steam generator so that all water evaporates at cooking chamber temperatures ≥ 100°C.

The air-steam flow 71 over the steam heater improves the efficiency of the steamer because the air flow over the water surface improves the evaporation rate. Indeed, it is well known that an evaporation coefficient depends on the air velocity over a surface being evaporated.

It has been calculated that an air flow, for example with a speed 1m/s over a steam heater in the from of a 110mm diameter heated disc, results in a 30% increase in evaporation rate compared to a static system.

The circulatory flow in the cooking apparatus of Figure 1 for example has a flow rate in the range 2 liters/second to 30 liters/second, for example in the range 5 liters/second to 15 liters/second between the cooking chamber and the heating chamber (i.e. flow arrow 70a before it splits into different flow paths).

The aim of the invention is to ensure a desired flow 71 over the steam heater, in particular preferably with a speed in the range 0.1 m/s to 5 m/s, for example in the range 0.5m/s to 1.5m/s and preferably with a flow rate in the range 1 liter/second to 30 liters/second.

The invention is based on the use of a channel arrangement to provide these desired flow conditions across the evaporation surface. In particular, the invention is based on the use of the food support to define the channel arrangement. The bottom surface of the food support comprises a channel arrangement for positioning over the steam heater.

The flow is desired to be maintained even if parts of the flow are restricted by cooking accessories and / or food. This predefined flow-path ensures that the steam generated by the steam heater is immediately transported to the main heater. The main heater acts as a super-heater before the generated steam is able to deposit or condensate at the food or walls and is kept circulating to preserve nutrients and provide efficient cooking. In this way, cleaning, by wiping the walls after cooking, is minimal since water is mainly only in the steam heater cup.

Figure 4 shows the bottom of the cooking chamber and shows the steam heater 16 as a circular pot (e.g. of diameter 110mm), with a feed arrangement 23 in the form of a water dosing nozzle.

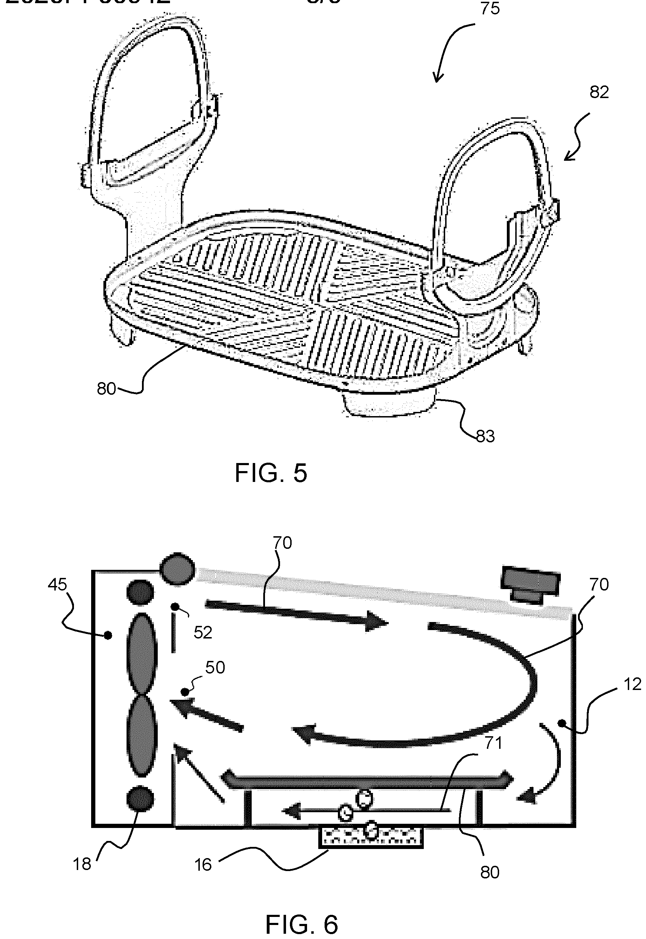

Figure 5 shows a standard food support 75 comprising for mounting in the cooking chamber 12, comprising a base 80 and a handle arrangement 82 for moving the base in and out of the cooking chamber. The handle arrangement 82 for example comprise spring-loaded handles, which retract when not in used.

The base 80 is for example aluminized steel (with a coating). It has feet 83 which for example space the bottom of the base from the base of the cooking chamber by a minimum separation (excluding the feet) in the range 3mm to 30mm. The base 80 divides the airflow and thereby forms an air-guiding channel between the base 80 and the bottom of the cooking chamber 12. This supports the generation and transport of the steam to the second heater 18. The base 80 can be used to support food directly or to hold other accessories.

In accordance with the invention, the base additionally defines a channel arrangement between the underside of the base and the bottom of the cooking chamber.

Figure 6 shows the flow paths with the food support in place.

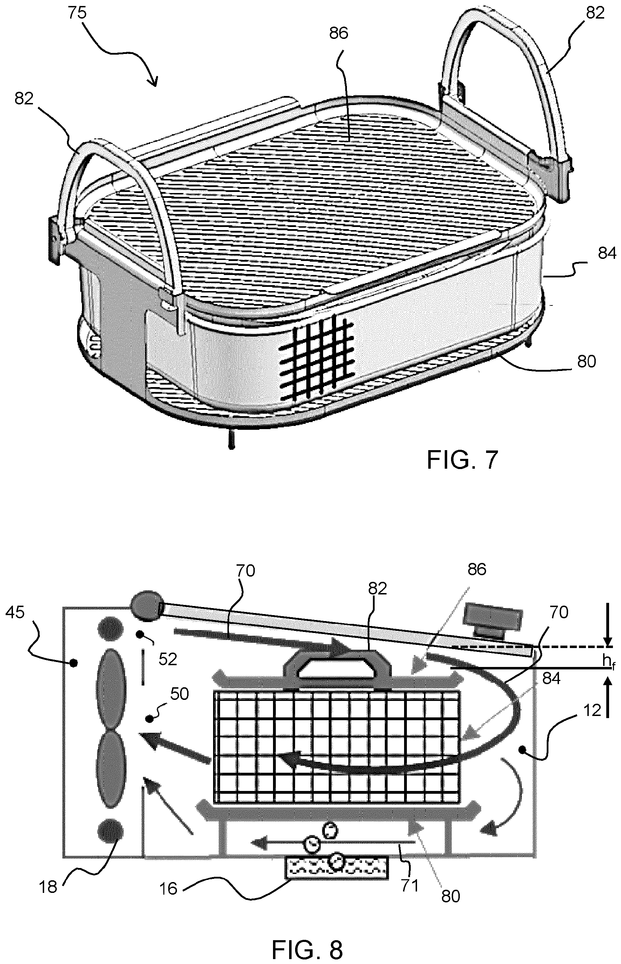

Figure 7 shows a perspective view of a second example of food support 75 as proposed by the applicant.

The food support again comprises a base 80 and a handle arrangement 82 for moving the base in and out of the cooking chamber, but this design also includes a basket 84 for mounting over the base 80.

The basket 84 holds bulky food and lets the air and steam pass through to effectively cook the food. For this purpose, the basket 84 has perforated sides to allow air to flow through, so that it is an air permeable support. The basket is for example formed as a pulled wire mesh frame. It for example has a volume of in the range 1.5 liters to 2.5 liters such as 2.2 liters. It has a height in the range 50mm to 80mm. The basket is for containing first food items to be cooked. The basket could have a perforated or a non-perforated bottom.

A lid plate 86 is mounted over the basket 84, and is for supporting second food items to be cooked. The lid plate 86 is for example aluminized steel (with a coating). The top surface of the lid plate 86 may be at the same level as the top of the basket, or above the top of the basket, or it may be sunk slightly below the top of the basket. By having the surface of the lid plate 86 slightly below the level of the top of the basket, such as by 2mm, this allows a maximal height of the basket and hence a maximum volume of the basket (which is desired when cooking with only the basket), while maintaining a space between the lid plate and the transparent lid of the device at the front area of the cooking device. The basket may for example have feet to sit directly in the cooking chamber so that a separate base is not needed.

Figure 8 shows a simplified diagram of the cooking apparatus including the food support of the type shown in Figure 7, and showing the flow paths.

The lid plate 86 is in this example mounted next to the air delivery vent 52 which for example extends at least over the half of the width of the food support. In this way, food like meat is exposed to the hot air and steam directly delivered and thus obtains gentle browning. The two heaters 16, 18 both contribute to the cooking and temperature control during the cooking. The first heater 16 means that the lower layer of the cooking chamber, which is remote from the delivery vent, also has good heating performance. The food support, in particular the base, is designed taking into account the position and function of the first heater 16 in order to provide a desired flow of heated steam and air around he cooking chamber.

The food on the lid plate 86 can be observed directly through the transparent lid. After opening the lid, it is easy to interact with the second food items, for example to turn them, take them out or put them in. The lid plate 86 also acts as an air-guide to assist the flow of air and steam along the underside of the transparent lid to prevent condensation of steam.

Figures 6 and 8 also show that the lid is inclined downwardly from the rear wall to the front wall. This further assists in preventing condensation of steam at the transparent section of the lid via heating.

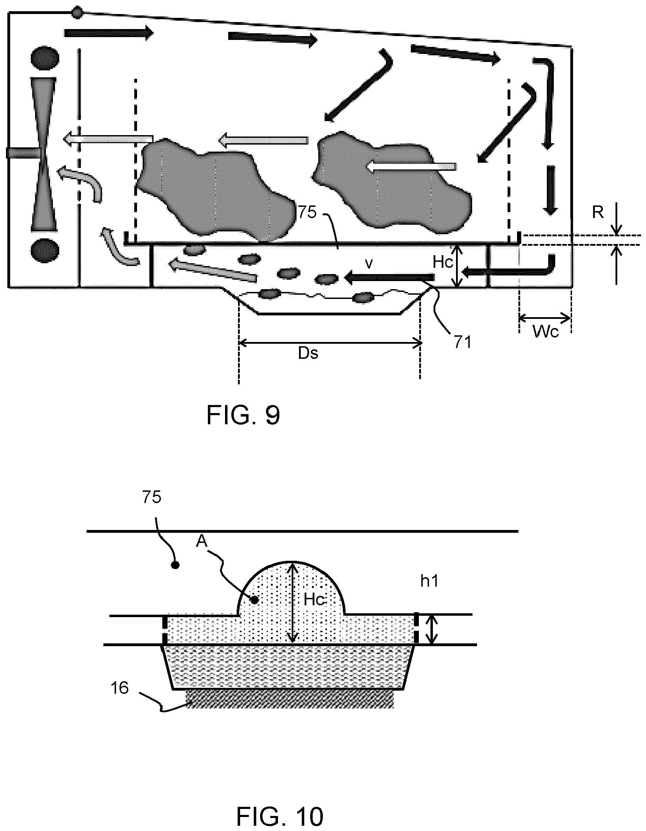

Figure 9 shows example dimensions for a channel formed by the underside of the base of the food support 75.

At the location of the channel, the maximum height Hc of the bottom surface of the food support 75 is in the range 5mm to 30mm, for example 12mm. The food support for example has dimensions (in the horizontal plane) of 250mm x 180mm.

A width Wc of a space around the periphery of the food support, in a horizontal plane, is also for example in the range 5mm to 30mm. The air-steam flow 71 has a flow rate in the range 1 liter/second to 30 liters/second with speed v of in the range 0.1m/s to 5 m/s.

Figure 10 shows one channel formed in the bottom surface of the food support in cross section. The channel is formed as a raised portion in the bottom surface (or a depressed portion when viewed from underneath).

The channel creates a maximum height Hc above the bottom of the cooking chamber, but the top of the channel remains below the height of the rim of the food chamber 75. A lower height h1 is present for an area around the channel.

As explained above, the height Hc is in the range 5mm to 30mm.
The height h1 is in the range 3mm to 20mm such as around 5mm.
The channel cross sectional area A for the area above the water surface is in the range 600mm² to 4000mm² such as around 1000mm².

The design of the channel arrangement is designed to provide a balance between flow speed and flow channel size is. If the channel height is too small, the flow will decrease (despite the smaller area) because the flow resistance is increasing.

Various possible arrangements of the channels when viewed from above or below are possible. The shapes used will be determined by the air flow and the position of the water nozzle. A crossed channel shape is one particularly preferred example as described further below.

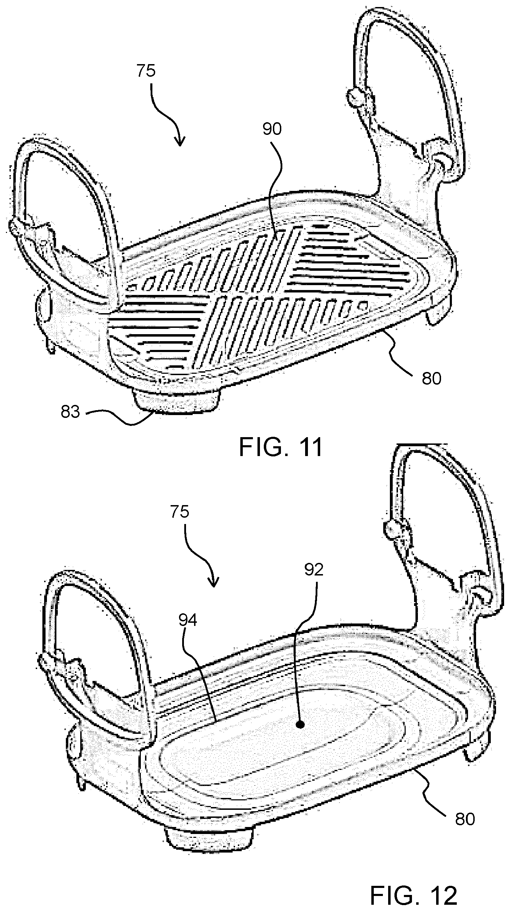

Figure 11 shows a further example of food support 75 to which the channel arrangement of the invention may be applied. The food support comprises a base 80 and feet 83 as in the examples above, and additionally comprises a support tray 90 in the form of a grid plate mounted over the base 80 for supporting food items to be cooked. This prevents the food items to be cooked from standing in liquid. Any liquid drains to a well formed by the base beneath the support tray 90. The well for example has a volume, beneath the support tray, in the range 350ml to 700ml.

Figure 12 shows the food support with the support tray removed. It shows that the bottom surface of the base has a central well 92.

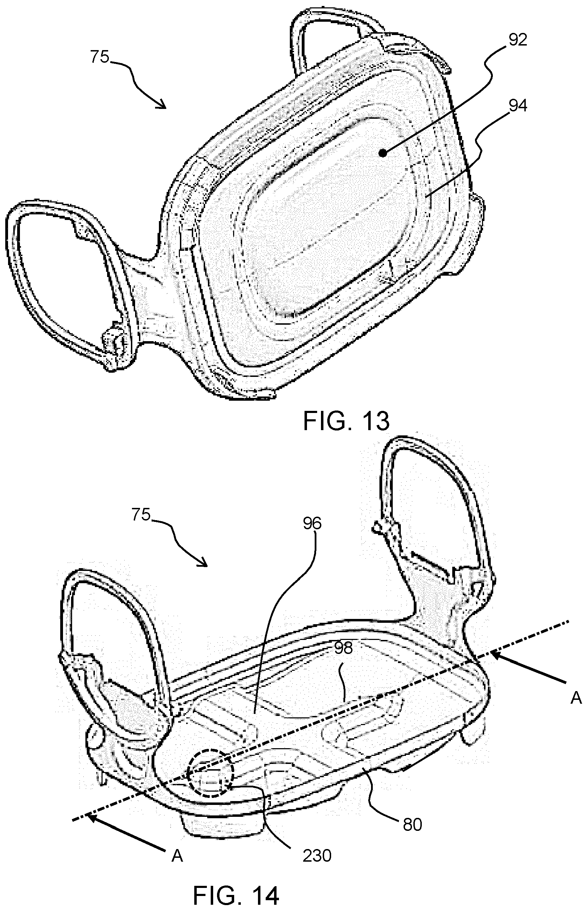

Figure 13 show the food support of Figure 12 from beneath.

Figure 14 shows the food support 75 of Figures 11 to 13 modified to provide a channel arrangement, and with the support tray removed. The channel arrangement comprises first and second orthogonal channels 96, 98 which cross, as mentioned above. The channel 96 may be considered to be a main flow channel which runs in a front to back direction of the steam cooker and it carries the flow 71. The handles are positioned at the lateral sides. The channel 98 is a steam delivery channel which extends across the steam heater.

The channel arrangement enables the well to be lowered to a low height over the base of the cooking chamber while still providing the desired air and steam flow passageways.

An area 230 of the food support corresponds to the location of the water feed arrangement (nozzle) 23 shown in Figure 4. From the nozzle 23, the water flows down to the heater, and the nozzle is higher than the heater area. To enable the generated steam to expand there is a connection to the main channel 96.

Note that the cross shape means the consumer can insert the food tray in two ways (180 degrees apart) and the channel 98 sits over the nozzle in either orientation.

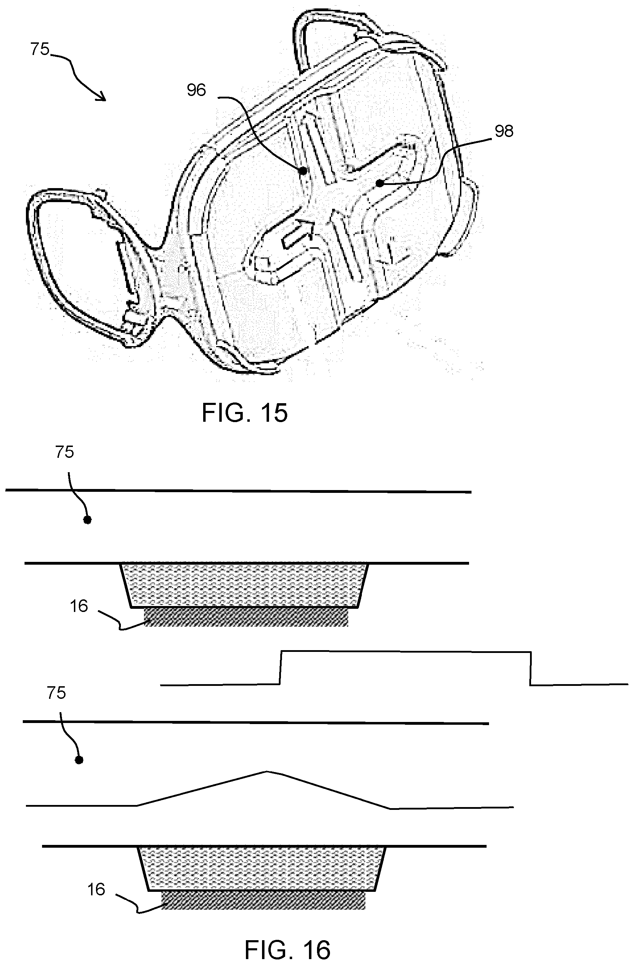

Figure 15 shows the food support of Figure 14 from beneath.

Figure 16 shows two possible designs for the shape of the channel 98, when viewed in cross section along direction A-A of Figure 14. In the top design, the channel has a flat top. In the bottom design, the channel has height which has a central peak.

The examples above also show a fan in the heating chamber. The fan may instead be in the cooking chamber, or alternative methods may be used for generating the desired circulatory flow so that the heater steam laden air circulates around the cooking chamber.

The examples above have the basket (and/or pot) sitting on a base. However, the basket may be received directly in the cooking chamber and it may define the channel arrangement at its bottom surface. The basket may for example be mounted to sidewalls of the cooking chamber or it may hang down from an upper edge of the cooking chamber or the lid, with hooks. Similarly, even where there is a base, the base does not need to sit on the base of the cooking chamber. It may instead again hang down from the top of the cooking chamber or lid, or be supported be the side walls.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A steam cooking apparatus (10), comprising:
a cooking chamber (12);
a steam heater at a bottom surface of the cooking chamber;
a water reservoir;
a delivery system for delivering water from the water reservoir to the steam heater;
a heating chamber (45) adjacent the cooking chamber;
a heating arrangement (18) located within the heating chamber (45) for heating air laden with steam;
a vent arrangement (50,52,54,56) between the cooking chamber (12) and the heating chamber (45) to allow a circulatory flow of steam laden air between the heating chamber and the cooking chamber; and
a food support (75) for mounting in the cooking chamber, wherein the food support has a bottom surface which comprises a channel arrangement for positioning over the steam heater.

2. The apparatus of claim 1, wherein the circulatory flow has a flow rate in the range 2 liters/second to 30 liters/second, for example in the range 5 liters/second to 15 liters/second between the cooking chamber and the heating chamber.

3. The apparatus of claim 1 or 2, wherein the steam heater has an evaporation rate in the range 5g/min to 10g/min.

4. The apparatus of any one of claims 1 to 3, wherein the flow over the steam heater has a speed in the range 0.1 m/s to 5 m/s, for example in the range 0.5m/s to 1.5m/s.

5. The apparatus of any one of claims 1 to 4, wherein the flow over the steam heater has a flow rate in the range 1 liter/second to 30 liters/second.

6. The apparatus of any one of claims 1 to 5, wherein the channel arrangement defines a channel height in the range 5mm to 30mm.

7. The apparatus of any one of claims 1 to 6, wherein a width of a space around the periphery of the food support, in a horizontal plane, is in the range 5mm to 30mm.

8. The apparatus of any one of claims 1 to 7, wherein the bottom surface forms the channel arrangement by raised portions of the bottom surface.

9. The apparatus of any one of claims 1 to 8, wherein the channel arrangement comprises first and second orthogonal channels which cross.

10. The apparatus of any one of claims 1 to 9, wherein the food support comprises feet for standing on the bottom of the cooking chamber, for positioning the bottom surface above the bottom of the cooking chamber/

11. The apparatus of any one of claims 1 to 10, wherein the food support comprises:
a base which functions as a capture tray and which forms the bottom surface; and
a support tray mounted over the base for supporting food items to be cooked.

12. The apparatus of claim 11, wherein the base comprises a well beneath the support tray.

13. The apparatus of claim 12, wherein the well has a volume, beneath the support tray, in the range 350ml to 700ml.

14. The apparatus of any one of claims 1 to 13, wherein the cooking chamber (12) comprises a base (40), a rear wall area (42) and a front wall area (44), wherein the vent arrangement comprises an extraction vent (50) in the rear wall area through which air is drawn from inside the cooking chamber, and a delivery vent (52) in the rear wall area for delivering air to the cooking chamber.

15. A food support for use as the food support of the steam cooking apparatus of any one of claims 1 to 14, for mounting in the cooking chamber of the steam cooking apparatus, wherein the food support has a bottom surface which comprises channel arrangement for positioning over the steam heater.
